# EUROPEAN PATENT APPLICATION

(11) **EP 1 673 973 A1**
(43) Date of publication of application: **28.06.2006**
(21) Application number: 05112847.8
(22) Date of filing: 22.12.2005
(51) Int. Cl.: A01M 7/00

(54) **Pesticide spray apparatus**

(30) Priority: 23.12.2004 IT BO20040803
(71) Applicant: Martignani Ing. C. Di Martignani Stefano & C. S.r.l., 48020 Sant'Agata Sul Santerno (IT)
(72) Inventor: Martignani, Claudio, 48022 Lugo (IT)
(74) Representative: Jorio, Paolo

(57) **Abstract**

A pesticide spray apparatus has a feed device (12) for feeding a pesticide into a gas stream generated by an impeller (5) and expelled by a pneumatic circuit (9); the impeller (5) being driven selectively by an internal combustion engine (21) and an electric motor (17).

## Description

The present invention relates to a pesticide spray apparatus.

A pesticide spray apparatus is known comprising a feed device for delivering a pesticide in a gas stream generated by an impeller and conducted into the atmosphere by a pneumatic circuit.

The impeller being rotated about its longitudinal axis by an internal combustion engine, known apparatuses of the above type have several drawbacks, mainly due to being relatively noisy and so constituting a source of acoustic pollution when operated in residential areas, on animal farms, and/or at nighttime.

It is an object of the present invention to provide a pesticide spray apparatus designed to eliminate the aforementioned drawbacks.

According to the present invention, there is provided a pesticide spray apparatus, as claimed in the accompanying Claims.

A non-limiting embodiment of the present invention will be described by way of example with reference to the accompanying drawings, in which:
Figure 1 shows a schematic view in perspective, with parts removed and parts enlarged for clarity, of a preferred embodiment of the apparatus according to the present invention;
Figure 2 shows a schematic view in perspective of a detail in Figure 1;
Figures 3 and 4 show, schematically two different operating modes of the Figure 2 detail.

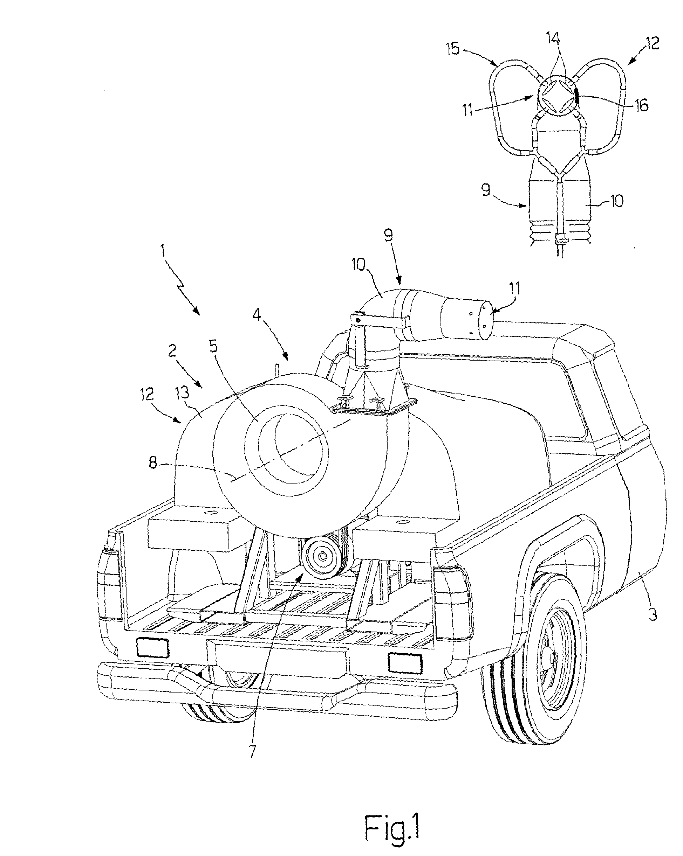

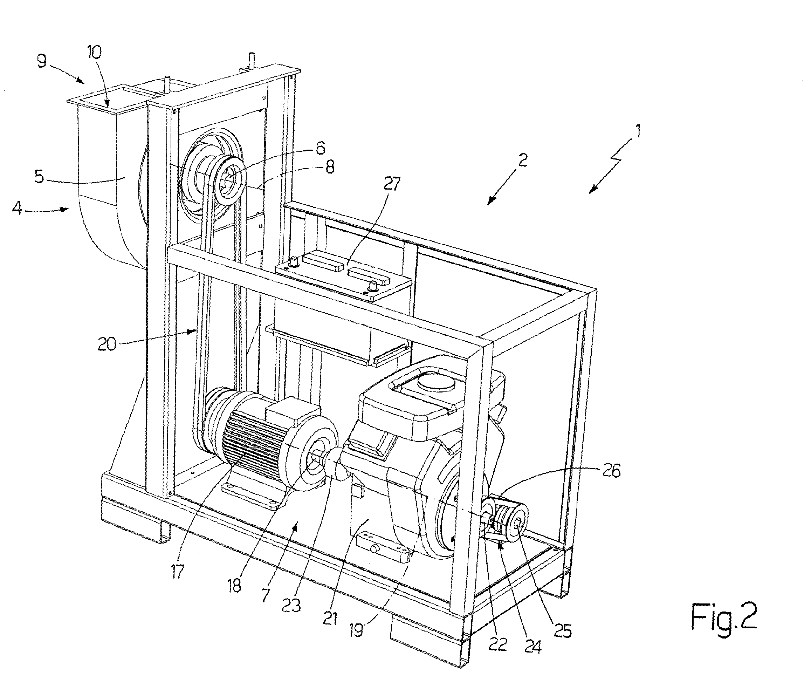

Number 1 in Figures 1 and 2 indicates as a whole a pesticide spray apparatus comprising a pneumatic atomizer unit 2, and a known vehicle 3 for transporting unit 2.

Unit 2 comprises a pneumatic device 4 mounted on vehicle 3 and in turn comprising an impeller 5 (in the example shown, a centrifugal impeller), which is fitted to a supporting shaft 6 rotated about a longitudinal axis 8 by a drive device 7, and generates an air stream expelled by a pneumatic feed circuit 9.

Circuit 9 comprises a feed conduit 10 for conducting the air stream generated by impeller 5 to an outlet 11 communicating with the outside.

Unit 2 also comprises a known feed device 12 for feeding a pesticide - in the example shown, a liquid pesticide mixture - into the air stream expelled through outlet 11, and which comprises a tank 13 containing the liquid mixture, and a number of (in the example shown, four) known spray nozzles 14 connected hydraulically to tank 13 by a hydraulic circuit 15, and projecting inside conduit 10 at outlet 11, so that the liquid mixture issuing from nozzles 14 is atomized by the air stream flowing along conduit 10.

Outlet 11, in the example shown, has an electrically powered metal plate 16 located close to nozzles 14 to electrostatically charge the atomized liquid mixture expelled through outlet 11.

In a variation not shown, unit 2 has a known feed device instead of, or in addition to, feed device 12, to feed a pesticide - in the example shown, a powdered pesticide - into the air stream fed through outlet 11.

As shown in Figures 2, 3 and 4, drive device 7 comprises an electric motor 17 having an output shaft 18, which is mounted to rotate about a respective longitudinal axis 19 parallel to axis 8, and has a first end connected to shaft 6 by a belt drive 20.

Device 7 also comprises an internal combustion engine 21 having an output shaft 22 coaxial with axis 19 and which has a first end connected to a second end of shaft 18 with the interposition of a coupling device 23 defined, in the example shown, by a free wheel for connecting shafts 18 and 22 in angularly fixed manner when internal combustion engine 21 is operated, and in rotary manner when electric motor 17 is operated.

In a variation not shown, the free wheel defining coupling device 23 is replaced by a mechanical or electromagnetic clutch movable between an operating position in which shafts 18 and 22 are connected in angularly fixed manner, and a rest position in which shafts 18 and 22 are connected in rotary manner.

Shaft 22 has a second end connected, with the interposition of a belt drive 24, to an input shaft 25 of a current generator 26 connected electrically to a power battery 27, in turn connected electrically to electric motor 17.

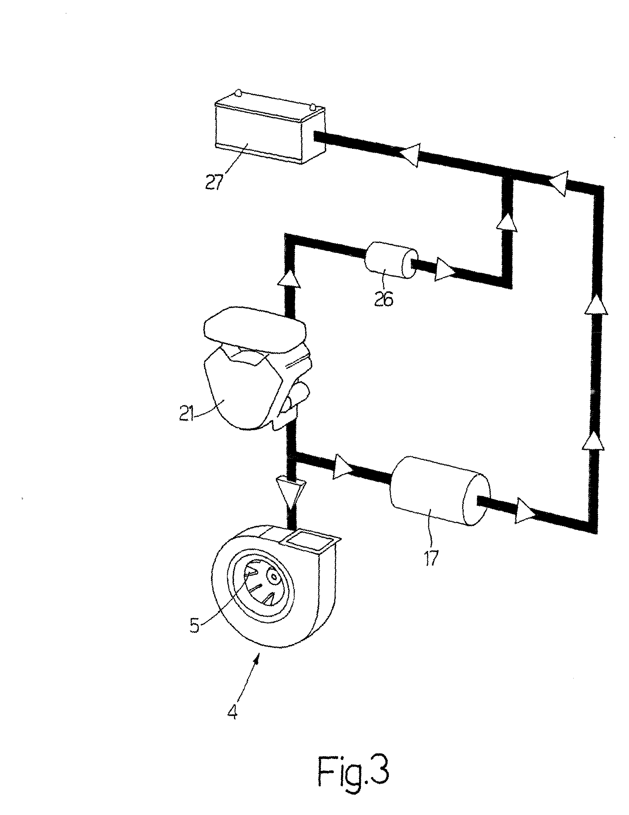

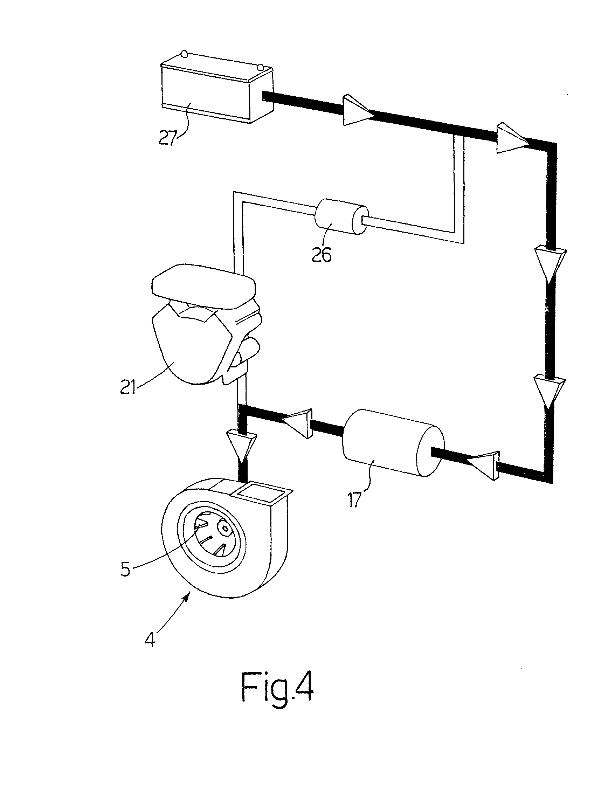

Operation of apparatus 1 will now be described with reference to Figure 3 relative to operation of internal combustion engine 21, and with reference to Figure 4 relative to operation of electric motor 17.

As shown in Figure 3, when internal combustion engine 21 is turned on, output shaft 22 is rotated about axis 19 so as to also rotate about axis 19 both output shaft 18 of electric motor 17, by means of the free wheel of coupling device 23, and input shaft 25 of current generator 26, by means of belt drive 24.

Supporting shaft 6 of impeller 5 is therefore rotated about axis 8 by shaft 18 by means of belt drive 20, and power battery 27 is charged electrically by both current generator 26 and electric motor 17.

As shown in Figure 4, when electric motor 17 is operated by battery 27, shaft 18 is rotated about axis 19 to rotate shaft 6 about axis 8 by means of belt drive 20, and is angularly disconnected from shaft 22 of engine 21 by the free wheel of coupling device 23.

Consequently:
operating impeller 5 by means of electric motor 17 eliminates the noise normally produced by internal combustion engine 21, so that apparatus 1 can be operated, for example, at nighttime, in residential areas, and on animal farms, and also eliminates the emissions of engine 21;
impeller 5 is normally operated by means of internal combustion engine 21 in daytime, i.e. when a higher noise level is permitted, so that both electric motor 17 and current generator 26 can be operated to electrically charge power battery 27.

## Claims

1. A pesticide spray apparatus comprising a pneumatic device (4), in turn comprising an impeller (5) for generating a gas stream, and a pneumatic circuit (9) for expelling the gas stream; a feed device (12) for feeding at least one pesticide into said gas stream; and a drive device (7) for driving said impeller (5); the drive device (7) comprising an internal combustion engine (21) for rotating the impeller (5) about a respective given longitudinal axis (8); and the apparatus being **characterized in that** the drive device (7) also comprises an electric motor (17) for rotating the impeller (5) about said axis (8); and coupling means (23) for selectively connecting the internal combustion engine (21) and the electric motor (17) to the impeller (5).

2. An apparatus as claimed in Claim 1, wherein said electric motor (17) and said internal combustion engine (21) respectively comprise a first and a second output shaft (18, 22), which are connected selectively to each other in rotary and angularly fixed manner by said coupling means (23).

3. An apparatus as claimed in Claim 2, and also comprising a battery (27) for powering said electric motor (17), and which is charged electrically by the electric motor (17) when the first output shaft (18) is rotated by the second output shaft (22).

4. An apparatus as claimed in Claim 3, and also comprising a current generator (26) interposed between the internal combustion engine (21) and the battery (27) to electrically charge the battery (27) when the internal combustion engine (21) is operated.

5. An apparatus as claimed in any one of Claims 2 to 4, and also comprising drive means (20) interposed between the impeller (5) and said first output shaft (18) to transmit rotation of said first output shaft (18) to the impeller (5).

6. An apparatus as claimed in any one of the foregoing Claims, and also comprising an electric circuit for electrically charging said pesticide.

7. An apparatus as claimed in any one of the foregoing Claims, wherein said pesticide is a liquid pesticide.

8. An apparatus as claimed in any one of Claims 1 to 6, wherein said pesticide is a powdered pesticide.

9. An apparatus as claimed in any one of Claims 1 to 6, wherein said feed device (12) selectively feeds a liquid pesticide and a powdered pesticide into said gas stream.
